Europäisches Patentamt

European Patent Office

Office européen des brevets

(11) Publication number: **0 253 514**
**A1**

# EUROPEAN PATENT APPLICATION

(21) Application number: **87305387.0**

(22) Date of filing: **17.06.87**

(51) Int. Cl.⁴: **E02B 15/04**

(30) Priority: **02.07.86 GB 8616126**

(43) Date of publication of application:
**20.01.88 Bulletin 88/03**

(84) Designated Contracting States:
**DE ES FR GB IT**

(71) Applicant: **VIKOMA INTERNATIONAL LIMITED**
**88 Place Road Cowes**
**Isle of Wight PO31 7AE(GB)**

(72) Inventor: **Butler, John**
**2 Nettlecombe Cottages Nettlecombe LAne**
**Ventor Isle of Wight Hampshire(GB)**

(74) Representative: **Purvis, William Michael**
**Cameron**
**D. Young & Co. 10 Staple Inn**
**London WC1V 7RD(GB)**

(54) **Barrier.**

(57) A barrier which can be rapidly deployed from a stored condition and, once deployed, can provide an effective barrier to spreading of an oil slick on water, comprises a flexible curtain (2), flotation members (6) hingedly connected to the curtain (2) at positions intermediate the height of the curtain and stiffening means (3) to stiffen the curtain.

The curtain is integrally formed with envelopes (8) of sheet plastics material with buoyant material (7) contained in the envelopes (8) to form the flotation members (6), the sheet plastics material forming the hinge connections (10) between the flotation members (6) and the curtain (2). The flotation members (6) can hingedly move between a deployed position in which they extend laterally outward from the generally upright plane of the curtain (2) and a storage position in which they extend downwardly from the hinge connection (10) generally parallel with the plane of the curtain (2).

Fig. 1.

## BARRIER

The invention relates to a barrier.

Barriers have previously been proposed for preventing dispersal of oil slicks caused by oil spillages in water.

It is desirable that such a barrier can be rapidly deployed from a stored condition and, once deployed, can provide an effective barrier to spreading of an oil slick.

According to the invention a barrier is characterised by a flexible curtain, flotation members hingedly connected to the curtain at positions intermediate the height of the curtain and stiffening means to stiffen the curtain.

The stiffening means may comprise rods engaged in pockets in the curtain and the rods may comprise both vertically extending rods and horizontally extending rods.

Preferably the curtain is integrally formed with envelopes of sheet plastics material, buoyant material is contained in the envelopes to form the flotation members, and the sheet plastics material forms the hinge connections between the flotation members and the curtain. The flotation members are preferably of generally parallelepipedal configuration, are hingedly connected to the curtain along one edge and can hingedly move between a position in which they extend laterally outwardly from the generally upright plane of the curtain, which position is the position of deployment, and a further position in which they extend downwardly from the hinge connection generally parallel with the plane of the curtain, which further position is a storage position. Preferably each flotation member has a flexible strap extending from an outer edge, that is to say an edge opposite to said one edge, to a position adjacent the lower edge of the curtain thereby to prevent the flotation member from moving upwardly beyond the position at which it extends generally at right angles to the plane of the curtain.

Preferably the lower edge of the curtain includes weighting means, advantageously extending in a pocket formed along the lower edge of the curtain.

The invention is diagrammatically illustrated by way of example in the accompanying drawings in which:-

Figure 1 is a sectional view through one embodiment of a barrier according to the invention with one float thereof shown in a deployed position and a further float in a storage position; and

Figure 2 shows a length of barrier in a plan view corresponding to Figure 1 except that both of the floats shown in the deployed position.

Referring to the drawings, a barrier 1 comprises a curtain 2 which is vertical when the barrier is in a deployed condition and includes vertically extending stiffeners 3. The stiffeners 3 are preferably rods engaged in pockets in the curtains. Horizontally extending stiffeners may also be provided if desired, preferably at the upper edge of the curtain 2. At its lower edge the curtain 2 includes a pocket 4 in which a galvanized chain 5 is provided as weighting.

At a position slightly above the midposition in the height of the curtain 3, which position is the waterline position, floats 6 are hingedly connected to the curtain. Each float 6 comprises a parallelipipedal member 7 of polystyrene foam contained in an envelope 8 with the optional addition of a float stiffening sheet 9, the envelope 8 being integral with the curtain 3 with an integral hinge 10 of plastics material therebetween. One or more straps 11 extend from the outer edge of the float envelope 8 to the lower edge of the curtain 2.

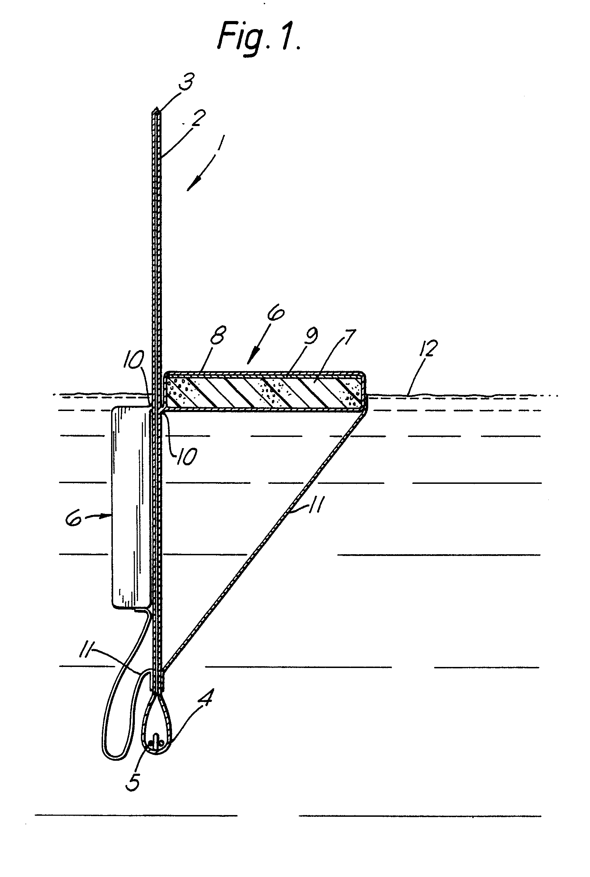

Figure 1 shows at the right-hand side thereof one of the floats 6 in a deployed position with the water surface in which the barrier is floating indicated at 12. At the left-hand side, Figure 1 shows one of the floats 6 in a position which will be adopted after the barrier has been lifted out of the water and wherein the float 6 is hinged downwardly on the integral hinge 10 so that the undersurface of the float lies against the curtain 3. The strap 11 is thus in a slack condition.

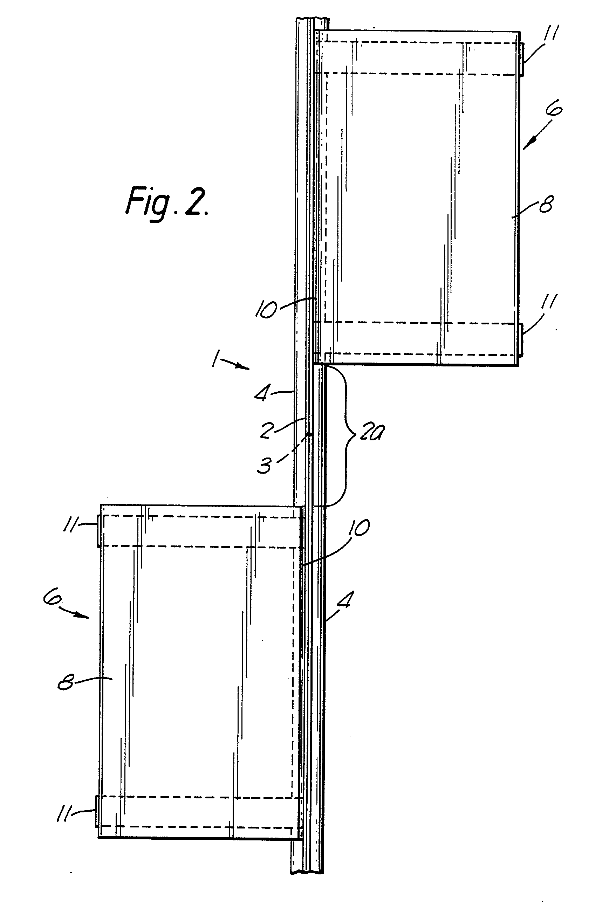

Figure 2 shows that in the illustrated embodiment, adjacent ones of the floats 6 are offset from one another on opposite sides of the curtain 2 and are spaced apart so as to leave portions 2 a at the waterline of the curtain 2 at which no floats 6 are provided. The offsetting of the floats 6 assists stowage when the barrier is not deployed since the barrier can be stowed in a fan fold manner, floats may however be provided directly opposite one another.

In one particular embodiment of a barrier according to the invention the distance between the hinge 10 and the top edge of the curtain 2 was 356mm, the distance between the hinge 10 and the lower edge of the curtain was 456mm, each float 6 was 700mm in length and 240mm in width with a depth of 50mm and the vertical stiffeners 3 were provided as plastics members in pockets in the curtain at 1m intervals. Dimensions and construction materials are however not fixed parameters and will be varied to meet proposed environmental operating conditions.

Once deployed, the barrier 1 will assume a cruciform shape, that is to say the curtain 2 will extend vertically and the floats 6 will extend horizontally thereby providing a wide, highly stable buoyant platform. If, under wind action, the barrier tends to heel to leeward, the tension in the strap to the leeward float 6 will be increased and the tension in the strap 11 to the windward float 6 will be reduced. This will rapidly move the centre of buoyancy ahead of the barrier thereby generating a significant righting moment. When the barrier is recovered from the water and floats will automatically fold down so that the barrier takes on a compact, thin and flat form, ideally suited for low volume storage.

The barrier of the invention can achieve much improved boom stability in a permanent buoyancy boom and this can be very significant.

Deployment of a barrier according to the invention can be much easier than for existing barriers while the storage characteristics can be excellent.

## Claims

1. A barrier (1) characterised by a flexible curtain (2), flotation members (6) hingedly connected to the curtain (2) at positions intermediate the height of the curtain (2) and stiffening means (3) to stiffen the curtain (2).

2. A barrier according to claim 1, in which the stiffening means (3) comprise rods engaged in pockets in the curtain (2).

3. A barrier according to claim 2, in which the rods comprise vertically extending rods and horizontally extending rods.

4. A barrier according to any one of claims 1 to 3, in which the curtain (2) is integrally formed with envelopes (8) of sheet plastics material, buoyant material (7) is contained in the envelopes (8) to form the flotation members (6) and the sheet plastics material forms the hinge connections (10) between the flotation members (6) and the curtain (2).

5. A barrier according to any one of claim 1 to 4, in which the flotation members (6) are of generally parallelepipedal configuration, are hingedly connected to the curtain along one edge and can hingedly move between a position in which they extend laterally outward from the generally upright plane of the curtain (2), which position is the position of deployment, and a further position in which they extend downwardly from the hinge connection (10) generally parallel with the plane of the curtain, which further position is a storage position.

6. A barrier according to claim 5, in which each flotation member (6) has a flexible strap (11) extending from an outer edge, that is to say an edge opposite to said one edge, to a position adjacent the lower edge of the curtain (2) thereby to prevent the flotation member (6) from moving upwardly beyond the position at which it extends generally at right angles to the plane of the curtain (2).

7. A barrier according to any one of claims 1 to 6, in which the lower edge of the curtain (2) includes weighting means (5).

8. A barrier according to claim 7, in which the weighting means (5) is provided extending in a pocket (4) formed along the lower edge of the curtain (2).

# Fig. 1.

Fig. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 159 714 (MILLOT)  \* Whole document \* | 1,2,7,8 | E 02 B 15/04 |
| X | FR-A-2 009 655 (HENKE)  \* Pages 3-6; figures 1-3 \* | 1,4-6 | |
| X | WO-A-8 300 517 (ERIKSSON)  \* Whole document \* | 1,2 | |
| A | GB-A-2 069 417 (CESSOU)  \* Page 2, lines 1-14; figure 1 \* | 2,3 | |
| A | FR-A-2 350 429 (BARTH) | | |
| A | US-A-4 248 547 (BROWN) | | |

TECHNICAL FIELDS SEARCHED (Int. Cl.4)

E 02 B

The present search report has been drawn up for all claims

| Place of search | Date of completion of the search | Examiner |
|---|---|---|
| THE HAGUE | 28-10-1987 | HANNAART J.P. |